# EUROPÄISCHE PATENTSCHRIFT

(11) **EP 2 130 701 B1**
(45) Veröffentlichungstag und Bekanntmachung des Hinweises auf die Patenterteilung: **14.03.2012**
(21) Anmeldenummer: 09161761.3
(22) Anmeldetag: 03.06.2009
(51) Int. Cl.: B60D 1/54, B60D 1/06

(54) **Anhängekupplung für Fahrzeuge**
Tow bar for vehicles
Attelage pour véhicules

(30) Priorität: 06.06.2008 DE 202008007577 U; 06.06.2008 DE 202008007578 U; 06.06.2008 DE 202008007579 U; 06.06.2008 DE 202008007580 U; 06.06.2008 DE 202008007589 U
(43) Veröffentlichungstag der Anmeldung: 09.12.2009
(73) Patentinhaber: FAC Frank Abels Consulting & Technology GmbH, 29633 Munster (DE)
(72) Erfinder: Abels, Frank, 29633, Munster (DE)
(74) Vertreter: Feder Walter Ebert

(56) Entgegenhaltungen:
- EP-A1- 1 557 300
- DE-A1- 19 941 000
- DE-A1-102006 043 429
- DE-U1- 9 109 699
- US-A- 2 408 531

## Beschreibung

Die Erfindung betrifft eine Anhängekupplung für Fahrzeuge, die aus einer Arbeitsstellung in eine Ruhestellung bewegbar ist, sowie eine Vorrichtung zur Anordnung an einem Fahrzeugheck umfassend einen Stoßfänger und eine Anhängekupplung. Die Anhängekupplung weist einen Kupplungshals auf, dessen eines Ende mit einer Kupplungskugel verbunden ist. In der Arbeitsstellung kann an die Kupplungskugel ein Fahrzeuganhänger angekuppelt werden.

Bei Nichtgebrauch einer Anhängekupplung ist es wünschenswert, wenn diese in eine Ruhestellung bringbar ist, da die Anhängekupplung in der Arbeitsstellung, in der sie im Regelfall parallel zur Fahrzeugfahrtrichtung nach hinten absteht, beim Rückwärtsfahren ein Unfallrisiko birgt und zudem die Optik des Fahrzeugs beeinträchtigt. Aus diesem Grund ist der Kupplungshals zum Unterschwenken eines Stoßfängers um eine im Wesentlichen horizontale Drehachse schwenkbar gelagert, wodurch er in die Ruhestellung bringbar ist.

Eine bekannte, um eine horizontale Achse schwenkbar gelagerte Anhängekupplung wird beispielsweise in der US 2,733,936 offenbart. Die dort beschriebene Anhängekupplung weist einen Kupplungshals und eine über einen Kugelsockel am Kupplungshals angeordnete Kupplungskugel auf, die aus einer Arbeitsstellung, in der sie im Wesentlichen parallel zur Fahrzeugfahrtrichtung nach hinten absteht, in eine Ruhestellung bringbar ist, in welcher die Kupplungskugel und der Kupplungshals in einem Ruhestellungsraum angeordnet sind, der an einer Seite von dem Stoßfänger und an der dazu gegenüberliegenden Seite von der Fahrzeugkarosserie begrenzt wird. In der Ruhestellung sind der Kupplungshals und die Kupplungskugel gegen Sicht abgedeckt, so dass neben dem Fahrzeug stehende Personen, die auf den hinteren Stoßfänger blicken, die Kugel und den Hals nicht sehen können. Durch die horizontale Anordnung der Drehachse kann der Kupplungshals den hinteren Stoßfänger unterschwenken, indem er durch die Durchtrittsöffnung des Ruhestellungsraums zwischen Stoßfänger und Karosserie tritt, und somit in die Ruhestellung übergehen. Der Kupplungshals und die Kupplungskugel schwenken hierbei in großem Abstand zur unteren Kante des Stoßfängers in den Ruhestetlungsraum ein.

Weiterhin ist aus der DE 10 2006 043 429 A eine Anhänge-kupplung bekannt, die den Oberbegriff des Anspruchs 1 zeigt.

Nachteilig an der bekannten Anhängekupplung ist, dass die Anhängekupplung einen großen Bauraum benötigt, so dass sie nur bei solchen Fahrzeugen einsetzbar ist, bei denen der Ruhestellungsraum die erforderlichen Ausmaße aufweist, nämlich bei denen der Ruhestellungsraum auf Höhe der Drehachse breiter als der Radius der äußeren Rotationskontur der Anhängekupplung ist. Der Platzbedarf der Anhängekupplung wird darüber hinaus dadurch vergrößert, dass zum einen die Anhängekupplung in der Arbeitsstellung in der Regel vorgeschriebenen Randbedingungen, wie beispielsweise der Höhe der Kugel über dem Boden sowie dem Abstand der Kugel vom Stoßfänger, genügen muss und zum anderen, dass der Kupplungshals entsprechend robust dimensioniert sein muss, um die vorgeschriebenen Zugkräfte aufnehmen zu können.

Zudem weist die bekannte Anhängekupplung wegen des großen Raumbedarfs den Nachteil auf, dass sie bei solchen Fahrzeugen nicht eingesetzt werden kann, die einen in geringer Höhe über dem Boden liegenden Stoßfänger aufweisen, da bei solchen Fahrzeugen der für die Schwenkbewegung erforderliche Raum unterhalb der Drehachse nicht gegeben ist.

Die Erfindung hat die Aufgabe, eine Anhängekupplung bzw. eine Vorrichtung zur Anordnung an einem Fahrzeugheck der eingangs genannten Art derart auszugestalten, dass sie bei einer Vielzahl an Fahrzeugen, die insbesondere auch einen tief liegenden Stoßfänger aufweisen, einsetzbar ist.

Die Erfindung löst die Aufgabe mit den Merkmalen aus dem kennzeichnenden Teil der Patentansprüche 1 bis 5 und 11 bis 13. Vorteilhafte Weiterbildungen sind Bestandteil der abhängigen Ansprüche.

Bei einer ersten erfindungsgemäßen Ausgestaltung liegt ein Grundgedanke darin, den Kupplungshals derart auszubilden, dass er einen kreisbogenförmigen Abschnitt aufweist, dessen Radius im Wesentlichen dem Abstand der Drehachse zu einem in der Arbeitsstellung tiefsten Punkt des Kupplungshalses entspricht. Durch die abschnittsweise kreisbogenförmige Ausgestaltung des Kupplungshalses wird der unterhalb des Stoßfängers erforderliche Raumbedarf bei der Schwenkbewegung verringert, wodurch die Anhängekupplung auch bei Fahrzeugen mit tief liegendem Stoßfänger Einsatz finden kann.

Bevorzugt liegt die Drehachse im Mittelpunkt des durch den Kreisbogen-Abschnitt definierten Kreises. Hierdurch kann erreicht werden, dass der Kreisbogen-Abschnitt bei der Schwenkbewegung den tiefsten Punkt des Kupplungshalses in der Arbeitsstellung nicht unterschreitet, so dass der Kreisbogen-Abschnitt bei der Schwenkbewegung in ausreichender Höhe über dem Boden führbar ist.

Bei einer zweiten erfindungsgemäßen Ausgestaltung, die im Übrigen mit der ersten erfindungsgemäßen Ausgestaltung kombinierbar ist, weist der Kupplungshals neben dem Kreisbogenabschnitt einen Radial-Abschnitt auf, wobei die Länge des Radial-Abschnitts ausgehend von der Drehachse dem Radius des Kreisbogens des Kreisbogen-Abschnitts entspricht. Durch den Radial-Abschnitt kann die Drehachse in ausreichender Höhe hinter dem Stoßfänger im Ruhestellungsraum angeordnet werden.

Zudem kann der Kupplungshals nur aus dem Radial-Abschnitt, dem Kreisbogen-Abschnitt und einem Träger-Abschnitt zum Tragen der Kupplungskugel bestehen, wodurch sich eine einfache, nur aus wenigen Abschnitten zusammengesetzte Konstruktion des Kupplungshalses ergibt.

Bei einer weiteren erfindungsgemäßen Ausgestaltung weist der Kupplungshals zwei Abschnitte auf, die über eine Abwinklung miteinander verbunden sind, wobei der Abstand der Drehachse zur Abwinklung im Wesentlichen dem Abstand der Drehachse zur Kupplungskugel entspricht. Die Abwinklung kann hierbei im montierten Zustand der Anhängekupplung im Wesentlichen auf der Höhe des tiefsten Punktes des hinteren Stoßfängerabschnitts liegen. Durch diese Ausgestaltung ergibt sich eine günstige Position der Drehachse hinter dem Stoßfänger im Ruhestellungsraum, bei der die Kupplungskugel einen ausreichenden Abstand zum Stoßfänger einhält und gleichzeitig der Kupplungshals dicht an der unteren Stoßfängerkante vorbeigeführt werden kann.

Bei einer weiteren erfindungsgemäßen Ausgestaltung, bei der die Kupplungskugel über einen Kugelsockel mit dem Kupplungshals verbunden ist, liegt in der Arbeitsstellung der Kugelsockel in einer horizontalen Ebene, die durch die Drehachse verläuft. Durch diese Ausgestaltung ergibt sich eine günstige Position der Drehachse hinter dem Stoßfänger, bei der die Kupplungskugel eine ausreichende Höhe über dem Boden aufweist, wobei gleichzeitig der Kupplungshals dicht an der unteren Stoßfängerkante vorbeigeführt werden kann.

Bei einer weiteren erfindungsgemäßen Ausgestaltung ist vorgesehen, dass in der Ruhestellung der Winkel zwischen einer horizontalen Ebene, die durch die Drehachse verläuft, und einer Ebene die durch die Drehachse und den tiefsten Punkt der Kupplungskugel in der Ruhestellung verläuft, im Wesentlichen dem Winkel zwischen der horizontalen Ebene, die durch die Drehachse verläuft, und einer Ebene, die durch die Drehachse und den höchsten Punkt des Kupplungshalses verläuft, entspricht. Somit kann eine im Wesentlichen zu der durch die Drehachse verlaufenden Ebene symmetrische Anordnung der Anhängekupplung in der Ruhestellung erreicht werden, so dass der zur Verfügung stehende Ruhestellungsraum in vorteilhafter Weise ausnutzbar ist. Bevorzugt sind die beiden Winkel jeweils größer als 45°, insbesondere aber zudem kleiner als 80°.

Zur Lösung der Aufgabe wird ferner eine Vorrichtung zur Anordnung an einem Fahrzeugheck vorgeschlagen, die einen Stoßfänger mit einem äußeren Stoßfängerabschnitt und eine bereits beschriebene Anhängekupplung umfasst. Als äußerer Stoßfängerabschnitt wird hierbei der Abschnitt des Stoßfängers verstanden, der im Bereich der Anhängekupplung die Stoßfläche darstellt und somit für eine neben dem Fahrzeug stehende Person sichtbar ist.

Bei einer erfindungsgemäßen Vorrichtung zur Anordnung an einem Fahrzeugheck, umfassend einen Stoßfänger und eine zuvor beschriebene Anhängekupplung, ist der Abstand von einem tiefsten Punkt des äußeren Stoßfängerabschnitts zur Einheit aus Kupplungshals und Kupplungskugel über den Schwenkbereich, in dem die Einheit aus Kupplungshals und Kupplungskugel eine Ebene durchtritt, die durch die Drehachse und den tiefsten Punkt des äußeren Stoßfängerabschnitts verläuft, kleiner als der Abstand, insbesondere der halbe Abstand, von der Drehachse zum tiefsten Punkt des Stoßfängers. Durch diese Ausgestaltung wird der Vorteil erreicht, dass der Kupplungshals und die Kupplungskugel während der Schwenkbewegung dicht am Stoßfänger vorbeigeführt werden können, so dass der unterhalb des Stoßfängers erforderliche Raumbedarf bei der Schwenkbewegung verringert wird, wobei zugleich die Drehachse in einer ausreichenden Höhe hinter dem Stoßfänger im Ruhestellungsraum angeordnet ist, so dass der in der Arbeitsstellung erforderliche Abstand der Kupplungskugel zum Boden erreicht wird.

Bevorzugt ist der Abstand des tiefsten Punkts des äußeren Stoßfängerabschnitts zur Einheit aus Kupplungshals und Kupplungskugel über den gesamten Schwenkbereich von der Arbeitsstellung bis in die Ruhestellung kleiner als der Abstand von der Drehachse zum tiefsten Punkt des äußeren Stoßfängerabschnitts.

Bei einer weiteren erfindungsgemäßen Ausgestaltung einer Vorrichtung zur Anordnung an einem Fahrzeugheck umfassend einen Stoßfänger und eine Anhängekupplung ist der Kupplungshals in der Ruhestellung in einem Ruhestellungsraum angeordnet, der von einem äußeren Stoßfängerabschnitt begrenzt wird, wobei der Radius der äußeren Rotationskontur der Anhängekupplung im Wesentlichen dem Abstand von der Drehachse in Höhe einer horizontalen Ebene, die durch die Drehachse verläuft, zu einer Begrenzungswand des Ruhestellungsraums entspricht, die dem äußeren Stoßfängerabschnitt gegenüberliegt. Die dem äußeren Stoßfängerabschnitt gegenüberliegende Begrenzungswand kann je nach Ausgestaltung des Stoßfängers bzw. des Fahrzeugs ein innerer Stoßfängerabschnitt darstellen. Dies kann dann gegeben sein, wenn der Stoßfänger einen Hohlraum beinhaltet, der den Ruhestellungsraum darstellt. Falls der Stoßfänger keinen solchen inneren Stoßfängerabschnitt aufweist, wird die Begrenzungswand von einem Abschnitt der Karosserie des Fahrzeugs gebildet. Somit kann die bevorzugte Lage der Drehachse gefunden werden, bei welcher der vorhandene Ruhestellungsraum in vorteilhafter Weise ausnutzbar ist.

Bei einer weiteren erfindungsgemäßen Ausgestaltung einer Vorrichtung zur Anordnung an einem Fahrzeugheck umfassend einen Stoßfänger und eine Anhängekupplung ist die Breite einer unteren Durchtrittsöffnung des Ruhestellungsraums kleiner als der Radius der äußeren Rotationskontur der Anhängekupplung, wobei die Drehachse derart zum Kupplungshals angeordnet ist, dass bei der Bewegung in die Ruhestellung der Kupplungshals vollständig und die Kupplungskugel zumindest teilweise durch die Durchtrittsöffnung in den Ruhestellungsraum einschwenkbar sind. Durch diese Ausgestaltung lassen sich kleine Durchtrittsöffnungen realisieren, so dass Verunreinigungen und Fremdkörper in geringerem Maße in den Ruhestellungsraum eindringen können. Als Durchtrittsöffnung wird hierbei die schmalste Stelle verstanden, die der Kupplungshals 1 bei der Schwenkbewegung in den Ruhestellungsraum passieren muss. Die Durchtrittsöffnung kann somit beispielsweise zwischen dem äußeren Stoßfängerabschnitt und dem inneren Stoßfängerabschnitt oder zwischen dem äußeren Stoßfängerabschnitt und einem Teil der Fahrzeugkarosserie des Fahrzeughecks liegen.

Bei einer weiteren bevorzugten Ausgestaltung einer Vorrichtung verläuft die Drehachse der Anhängekupplung im Wesentlichen parallel zum Stoßfänger. Somit wird eine vorteilhafte Lage der Drehachse erreicht.

Bei einer weiteren bevorzugten Ausgestaltung einer Vorrichtung verläuft die Drehachse der Anhängekupplung im Wesentlichen in einem Winkel von 90° zur Fahrzeugfahrtrichtung. Somit wird eine vorteilhafte Lage der Drehachse erreicht.

Bei einer vorteilhaften Ausgestaltung ist die Anhängekupplung und/oder Vorrichtung derart ausgebildet, dass die Anhängekupplung mittels eines Antriebs, insbesondere eines Hydraulik- oder Pneumatik-Antriebs, von der Arbeitsstellung in die Ruhestellung und/oder umgekehrt bewegbar ist.

Bei einer weiteren vorteilhaften Ausgestaltung ist die Anhängekupplung und/oder Vorrichtung derart ausgebildet, dass der Kreisbogen-Abschnitt im Wesentlichen einen Viertelkreisbogen darstellt.

Bei einer weiteren vorteilhaften Ausgestaltung ist die Anhängekupplung und/oder Vorrichtung derart ausgebildet, dass die Drehachse gegen Sicht abgedeckt ist. Hierdurch kann u.a. die Optik des Fahrzeugs verbessert werden.

Bei einer weiteren vorteilhaften Ausgestaltung ist die Anhängekupplung und/oder Vorrichtung derart ausgebildet, dass die Drehachse oberhalb eines tiefsten Punktes des äußeren Stoßfängerabschnitts angeordnet ist. Hierdurch kann u.a. die Optik des Fahrzeugs verbessert werden, wobei ferner die Bodenfreiheit nicht negativ beeinträchtigt wird.

Bei einer weiteren vorteilhaften Ausgestaltung ist die Anhängekupplung und/oder Vorrichtung derart ausgebildet, dass der Kupplungshals in der Ruhestellung gegen Sicht abgedeckt ist. Hierdurch kann u.a. die Optik des Fahrzeugs verbessert werden.

Bei einer weiteren vorteilhaften Ausgestaltung ist die Anhängekupplung und/oder Vorrichtung derart ausgebildet, dass der Kupplungshals in der Ruhestellung oberhalb eines tiefsten Punktes des äußeren Stoßfängerabschnitts angeordnet ist. Hierdurch kann u.a. die Optik des Fahrzeugs verbessert werden, wobei ferner die Bodenfreiheit nicht negativ beeinträchtigt wird.

Bei einer weiteren vorteilhaften Ausgestaltung ist die Anhängekupplung und/oder Vorrichtung derart ausgebildet, dass die Verlängerung des Kreisbogens des Kreisbogen-Abschnitts die Kupplungskugel tangential berührt. Hierdurch kann der Vorteil erreicht werden, dass die dem Stoßfänger zugewandte Seite des Kreisbogen-Abschnitts des Kupplungshalses eine innere Rotationskontur bildet, auf welcher auch die dem Stoßfänger zugewandte Seite der Kupplungskugel verläuft, so dass die Einheit aus Kupplungskugel und Kupplungshals dicht am unteren Stoßfänger vorbeiführbar ist.

Bei einer weiteren vorteilhaften Ausgestaltung ist die Anhängekupplung und/oder Vorrichtung derart ausgebildet, dass der Kupplungshals einen Träger-Abschnitt zum Tragen der Kupplungskugel aufweist, der in radialer Richtung vom Kreisbogen-Abschnitt abstehend angeordnet ist. Hierdurch wird der Vorteil erreicht, dass der Träger-Abschnitt nicht in die innere Rotationskontur hineinfällt, so dass die Einheit aus Kupplungskugel und Kupplungshals dicht am unteren Stoßfänger vorbeiführbar ist.

Bei einer weiteren vorteilhaften Ausgestaltung ist die Anhängekupplung und/oder Vorrichtung derart ausgebildet, dass der Drehwinkel des gesamten Schwenkbereichs des Kupplungshalses von der Arbeitsstellung in die Ruhestellung 90° bis 180°, insbesondere 130° bis 160°, beträgt. Mit einem derart gewählten Schwenkbereich kann der Kupplungshals ausgehend von der Arbeitsstellung vollständig in den Ruhestellungsraum eingeschwenkt werden.

Bei einer weiteren vorteilhaften Ausgestaltung ist die Anhängekupplung und/oder Vorrichtung derart ausgebildet, dass die Anhängekupplung eine Feststellvorrichtung aufweist, mittels welcher die Anhängekupplung in der Arbeitsstellung feststellbar ist.

Bei einer weiteren vorteilhaften Ausgestaltung ist die Anhängekupplung und/oder Vorrichtung derart ausgebildet, dass die Anhängekupplung eine Verriegelungsvorrichtung aufweist, mittels welcher die Anhängekupplung in der Ruhestellung verriegelbar ist, wobei beim Lösen der Verriegelungsvorrichtung die Anhängekupplung selbständig in Arbeitsstellung übergeht.

Bei einer weiteren vorteilhaften Ausgestaltung ist die Anhängekupplung und/oder Vorrichtung derart ausgebildet, dass die Anhängekupplung ein Anschlagblech aufweist, an welchem der Kupplungshals, insbesondere der Radial-Abschnitt, in der Ruhestellung flächig anliegt.

Bei einer weiteren vorteilhaften Ausgestaltung ist die Anhängekupplung und/oder Vorrichtung derart ausgebildet, dass der Kupplungshals aus einem bandförmigen Material, insbesondere Flachstahl, hergestellt ist.

Bei einer weiteren vorteilhaften Ausgestaltung ist die Anhängekupplung und/oder Vorrichtung derart ausgebildet, dass der Kupplungshals zur Verstärkung mit Verstärkungsrippen versehen ist.

Die Erfindung umfasst ferner ein Fahrzeugheck mit einer bereits beschriebenen Vorrichtung zur Anordnung an einem Fahrzeugheck umfassend eine Anhängekupplung und einen Stoßfänger, wobei der Kupplungshals in der Ruhestellung in einem Ruhestellungsraum angeordnet ist, der von einem äußeren Stoßfängerabschnitt und einem Karosserieteil des Fahrzeughecks begrenzt wird. Der Ruhestellungsraum kann somit zwischen Karosserie und Stoßfänger liegen.

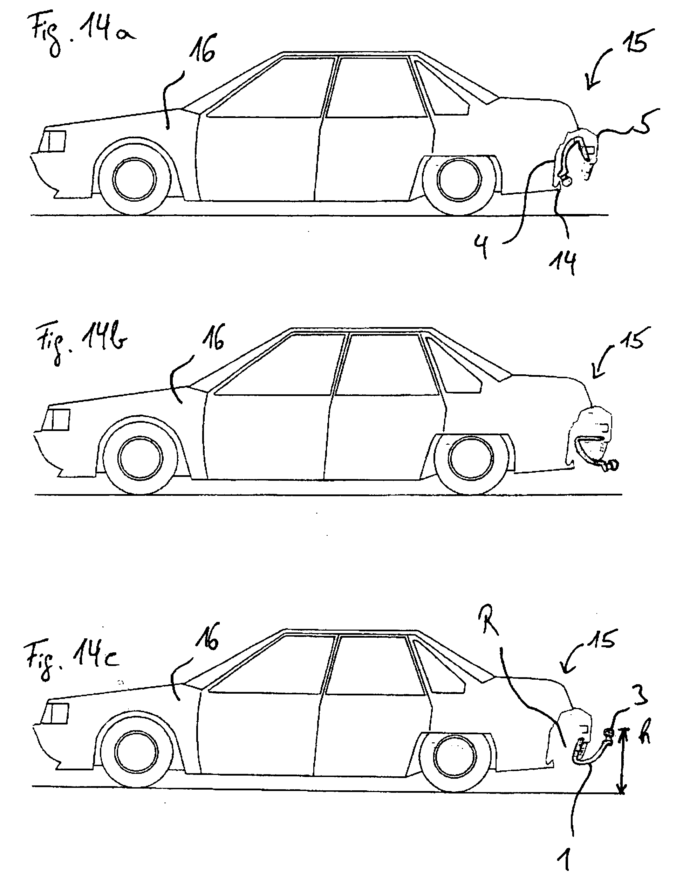

Eine vorteilhafte Ausgestaltung der Erfindung wird anhand der Figuren 1 bis 14 beschrieben. Es zeigen:
- Fig. 1: ein Fahrzeugheck mit einem Stoßfänger und einer Anhän- gekupplung in der Arbeitsstellung;
- Fig. 2: das Fahrzeugheck nach Fig. 1 mit der Anhängekupplung beim Übergang in die Ruhestellung;
- Fig. 3: das Fahrzeugheck nach Fig. 2 mit der Anhängekupplung beim Übergang in die Ruhestellung;
- Fig. 4: das Fahrzeugheck nach Fig. 3 mit der Anhängekupplung beim Übergang in die Ruhestellung;
- Fig. 5: das Fahrzeugheck nach Fig. 1 mit der Anhängekupplung in der Ruhestellung;
- Fig. 6: das Fahrzeugheck nach Fig. 1;
- Fig. 7: das Fahrzeugheck nach Fig. 3;
- Fig. 8: das Fahrzeugheck nach Fig. 1;
- Fig. 9: das Fahrzeugheck nach Fig. 1;
- Fig. 10: das Fahrzeugheck nach Fig. 5;
- Fig. 11: ein Detailausschnitt aus Fig. 3;
- Fig. 12: das Fahrzeugheck nach Fig. 1;
- Fig. 13: das Fahrzeugheck nach Fig. 1; und
- Fig. 14: ein Fahrzeug mit dem Fahrzeugheck nach Fig. 1.

Die Fig. 14a bis Fig. 14c zeigen ein Fahrzeug 16, mit einem Fahrzeugheck 15 mit einer als Karosserieteil 4 bezeichneten Karosseriewand und einer Anhängekupplung, die ausgehend von der in Fig. 14a dargestellten Arbeitsstellung über die in Fig. 14b gezeigt Zwischenstellung in die in Fig. 14c dargestellte Ruhestellung und umgekehrt bewegbar ist, sowie einen Stoßfänger 5, der zusammen mit der Anhängekupplung eine Vorrichtung zur Anordnung am Fahrzeugheck 15 darstellt.

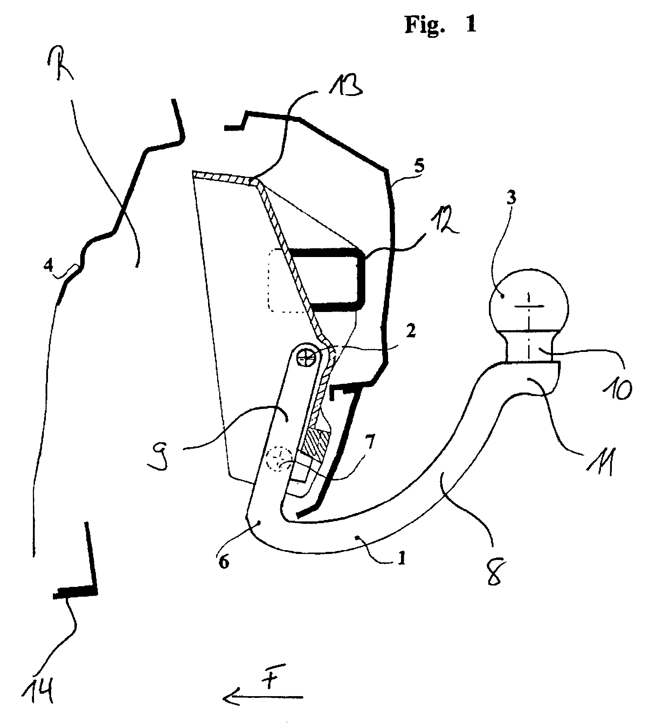

Die Anhängekupplung weist gemäß Fig. 1 einen Kupplungshals 1 auf, dessen eines Ende mit einer Kupplungskugel 3 verbunden ist. Am anderen Ende ist der Kupplungshals 1 drehbar gelagert, wobei die Drehachse 2 in einer horizontalen Ebene E_{D} liegt. Die Drehachse 2 liegt auch parallel zur unteren Kante des hinteren Stoßfängers 5. Die Drehachse 2 liegt ferner in einem Winkel von 90° zur Fahrzeugfahrtrichtung F und somit senkrecht zur Fahrzeugfahrtrichtung F. Somit erfolgt die Schwenkbewegung des Kupplungshalses 1 in einer vertikalen Ebene, die parallel zur Fahrzeugfahrtrichtung F liegt.

Die Anhängekupplung ist an dem Fahrzeugheck 15 zusammen mit dem Stoßfänger 5 über einen Querträger 12 befestigt. Der Stoßfänger besteht im Wesentlichen aus einem von außen sichtbaren, äußeren Stoßfängerabschnitt 5, der zusammen mit dem Karosserieteil 4 einen Hohlraum bildet, der für die Anhängekupplung einen Ruhestellungsraum R darstellt. Der Ruhestellungsraum R wird hierbei durch das Karosserieteil 4 und dem dazu im Wesentlichen gegenüberliegenden Stoßfängerabschnitt 5 begrenzt. Nach unten hin weist der Ruhestellungsraum R eine Durchtrittsöffnung auf, durch welche der Kupplungshals 1 bei der Bewegung in die Arbeitsstellung hindurchtreten kann. In der dargestellten Ausführung liegt die Durchtrittsöffnung zwischen dem äußeren Stoßfängerabschnitt 5 und einem Karosserieteil 14.

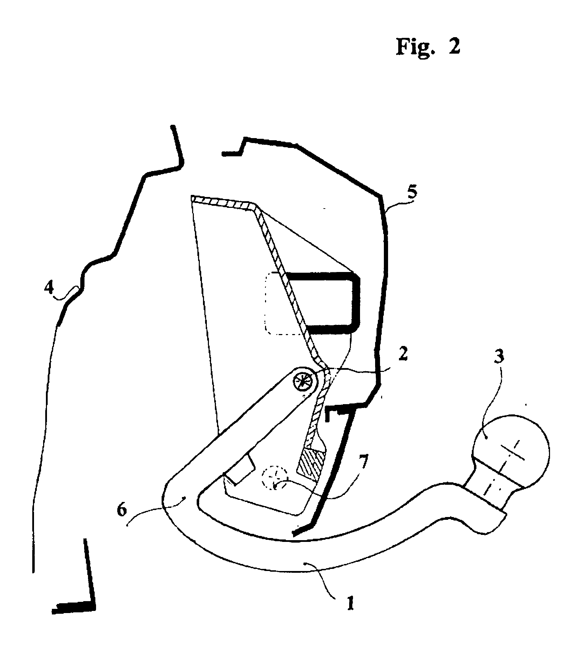

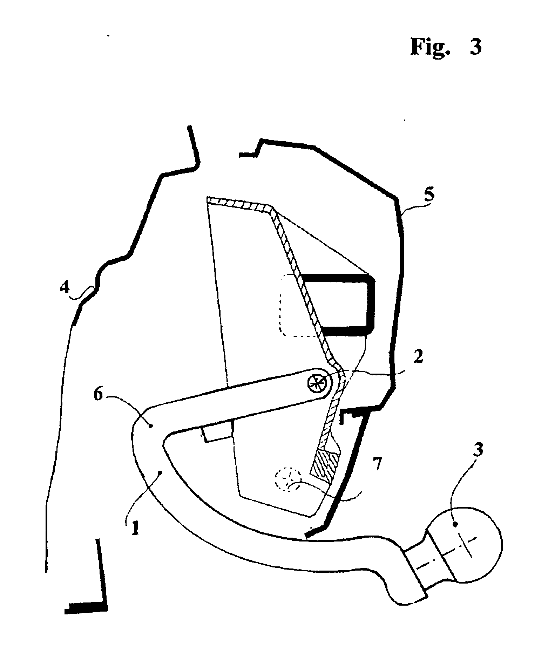

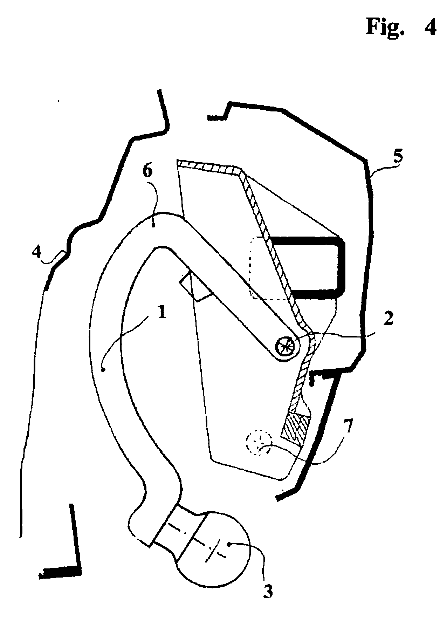

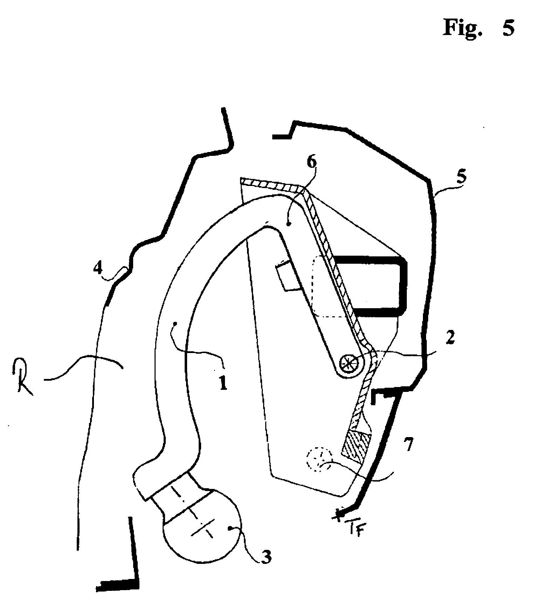

Die Fig. 1 bis Fig. 5 zeigen, wie der Kupplungshals 1 ausgehend von der Arbeitsstellung nach Fig. 1 über die Zwischenstellungen nach Fig. 2, Fig. 3 und Fig. 4 in die Ruhestellung nach Fig. 5 übergeht und dabei durch die Durchtrittsöffnung tritt und den hinteren Stoßfängerabschnitt 5 unterschwenkt. Der Drehwinkel des gesamten Schwenkbereichs des Kupplungshalses 1 von der Arbeitsstellung in die Ruhestellung beträgt etwa 145° und liegt somit im Bereich von 90° bis 180°. In der Ruhestellung nach Fig. 5 liegt der Kupplungshals 1 vollständig im Ruhestellungsraum R. Im Ruhestellungsraum R ist der Kupplungshals 1 somit gegen Sicht verdeckt. Ferner beeinträchtigt er die Bodenfreiheit des Fahrzeuges nicht.

Der Kupplungshals 1 liegt in der Ruhestellung vollständig oberhalb eines tiefsten Punktes T_{F} des äußeren Stoßfängerabschnitts 5. Zudem liegt auch die Drehachse 2 oberhalb des tiefsten Punktes T_{F} des äußeren Stoßfängerabschnitts 5 innerhalb des Ruhestellungsraumes R und ist somit gegen Sicht verdeckt.

Der Kupplungshals 1 umfasst einen Radial-Abschnitt 9 und einen Kreisbogen-Abschnitt 8, die über eine Abwinklung 6 miteinander verbunden sind, sowie einen Träger-Abschnitt 10. Der Radial-Abschnitt 9 ist hierbei als gerades Element ausgeführt, welches an einem Ende mit der Drehachse 2 und am anderen Ende mit dem Kreisbogen-Abschnitt 8 verbunden ist. Die Abwinklung 6 zwischen Radial-Abschnitt 9 und Kreisbogen-Abschnitt 8 beträgt im Wesentlichen 90°. Der Kreisbogen des Kreisbogen-Abschnitts 8 stellt einen Viertelkreis dar.

Die Kupplungskugel 3 ist über einen Kugelsockel 10 mit einem Träger-Abschnitt 11 des Kupplungshalses 1 mit dem Kreisbogen-Abschnitt 8 des Kupplungshalses 1 verbunden. Der Träger-Abschnitt 11 steht in radialer Richtung vom Kreisbogen-Abschnitt 8 ab. Auch ist denkbar, dass der Kreisbogenabschnitt-Abschnitt 8 direkt, d.h. ohne Trägerabschnitt, mit dem Kugelsockel 10 verbunden ist. Die Ausgestaltung von Kupplungskugel 3 und Kugelsockel 10 entspricht hierbei vorgeschriebenen Normen.

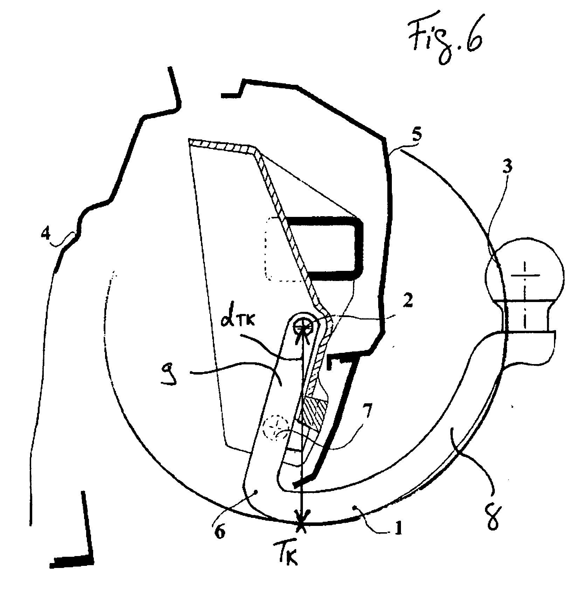

Der Radius des Kreisbogens des Kreisbogen-Abschnitts 8 entspricht gemäß Fig. 6 im Wesentlichen erfindungsgemäß dem Abstand d_{TK} des tiefsten Punktes T_{K} des Kupplungshalses 1 in der Arbeitsstellung zur Drehachse 2, wobei die Drehachse 2 im Mittelpunkt des durch den Kreisbogen definierten Kreises liegt. Durch die abschnittsweise kreisbogenförmige Ausgestaltung des Kupplungshalses 1 wird der unterhalb des Stoßfängers 5 erforderliche Raumbedarf bei der Schwenkbewegung verringert, wodurch die Anhängekupplung auch bei Fahrzeugen mit tief liegendem äußerem Stoßfängerabschnitt 5 Einsatz finden kann.

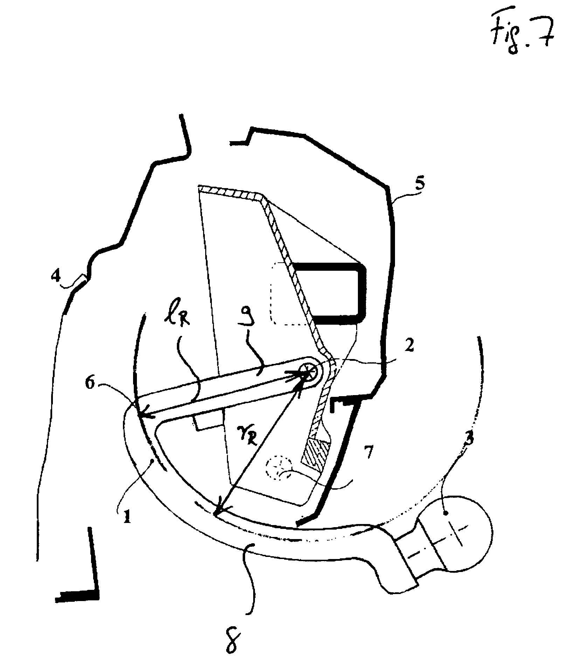

Gemäß Fig. 7 liegt erfindungsgemäß zwischen dem Radial-Abschnitt 9 und dem Kreisbogen-Abschnitt 8 die geometrische Beziehung vor, dass die Länge l_{R} des Radial-Abschnitts 9 im Wesentlichen dem Radius r_{R} des Kreisbogens des Kreisbogen-Abschnitts 8 entspricht.

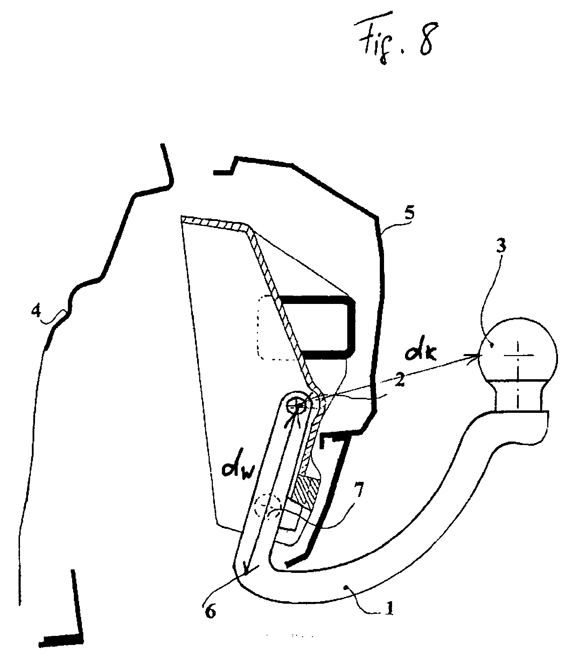

Gemäß Fig. 8 ist die Anhängekupplung zudem derart ausgestaltet, dass der Abstand d_{W} der Drehachse 2 zur Abwinklung 6 des Kupplungshalses 1 im Wesentlichen dem Abstand d_{K} der Drehachse 2 zur Kupplungskugel 3 entspricht. Die Abwinklung 6 liegt hierbei im Wesentlichen auf der Höhe des tiefsten Punktes T_{F} des hinteren Stoßfängerabschnitts 5. Der Abstand der Kupplungskugel 3 zum hinteren Stoßfängerabschnitt 5 darf nicht zu gering gewählt werden, damit die Kupplungsfunktion der Anhängekupplung nicht beeinträchtigt ist und vorgegebenen Normen genügt. Ferner muss auch die Höhe h der Kupplungskugel 3 über dem Boden ausreichend sein. Eine geometrisch vorteilhafte Ausgestaltung ergibt sich somit, wenn die Drehachse 2 derart angeordnet und die Anhängekupplung derart ausgestaltet ist, dass sich die Drehachse etwa im gleichen Abstand zur Abwinklung 6 und zur Kupplungskugel 3 befindet. Dadurch kann eine günstige innere Rotationskontur erreicht werden, in der die Anhängekupplung bei der Schwenkbewegung dicht unter den hinteren Stoßfänger 5 geführt werden kann.

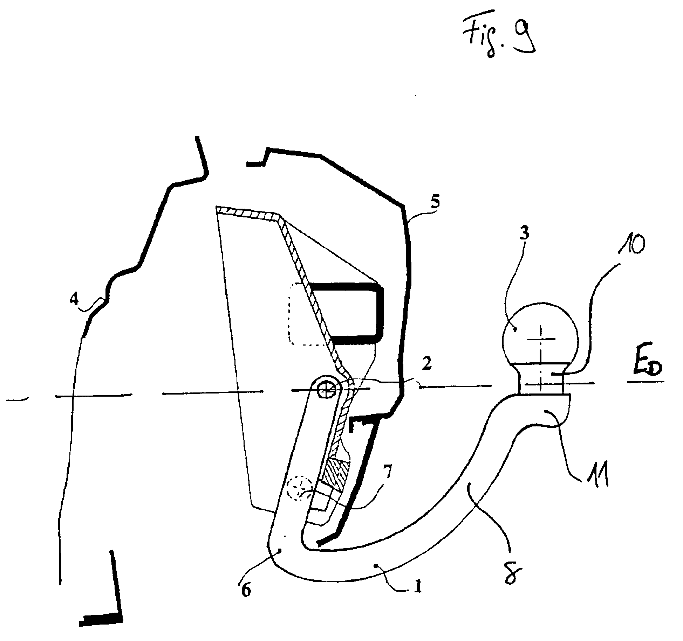

Um in der Arbeitsstellung die erforderliche Höhe h der Kupplungskugel 3 über dem Boden zu erreichen, ist die Anhängekupplung gemäß Fig. 9 derart ausgestaltet, dass sie ausgehend von der Ruhestellung in die Arbeitsstellung derart weit geschwenkt wird, dass der Kugelsockel 10, welcher die Kupplungskugel 3 mit dem Träger-Abschnitt 11 des Kupplungshalses 1 verbindet, in einer horizontalen Ebene E_{D} liegt, die durch die Drehachse 2 verläuft. Der Kugelsockel 10 befindet sich zusammen mit dem Träger-Abschnitt 11 am Ende des Kreisbogens des Kreisbogen-Abschnitts 8.

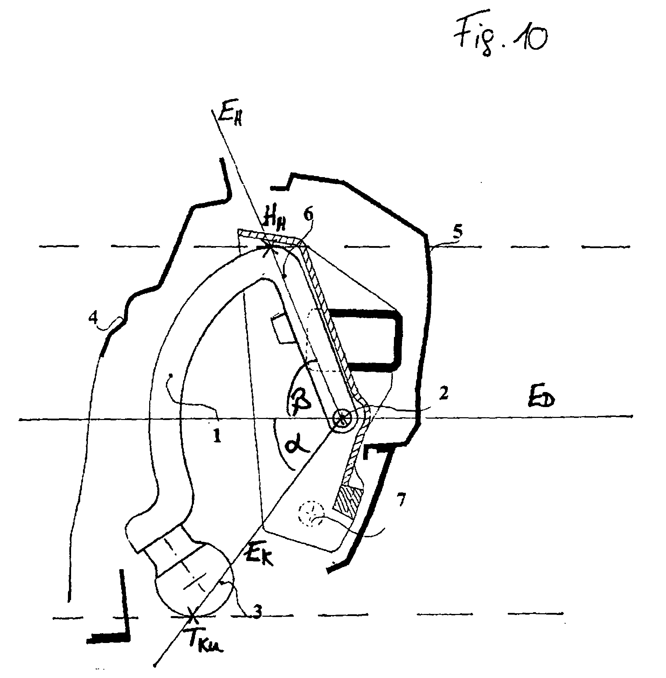

Um eine günstige Lage der Anhängekupplung im Ruhestellungsraum R zu erreichen, wird die Anhängekupplung gemäß Fig. 10 ausgehend von der Arbeitsstellung derart in die Ruhestellung geschwenkt, dass der Winkel α zwischen der horizontalen Ebene E_{D}, welche durch die Drehachse 2 verläuft, und der Ebene E_{K}, die durch die Drehachse 2 und den tiefsten Punkt T_{Ku} der Kupplungskugel in der Ruhestellung verläuft, im Wesentlichen dem Winkel β zwischen der horizontalen Ebene E_{D}, die durch die Drehachse 2 verläuft, und einer Ebene E_{H} entspricht, die durch die Drehachse 2 und den höchsten Punkt H_{H} des Kupplungshalses 1 in der Ruhestellung verläuft, wobei eine Winkeldifferenz von weniger 20° vorliegt. Die beiden Winkel α und β sind hierbei jeweils größer als 45°. Der Radial-Abschnitt 9 in der Ruhestellung liegt hierbei in der Ebene E_{H}. Durch diese Ausgestaltung wird der für die dargestellte Anhängekupplung benötige Bauraum minimiert, so dass die Anhängekupplung bei einer Vielzahl von Fahrzeugen Einsatz finden kann.

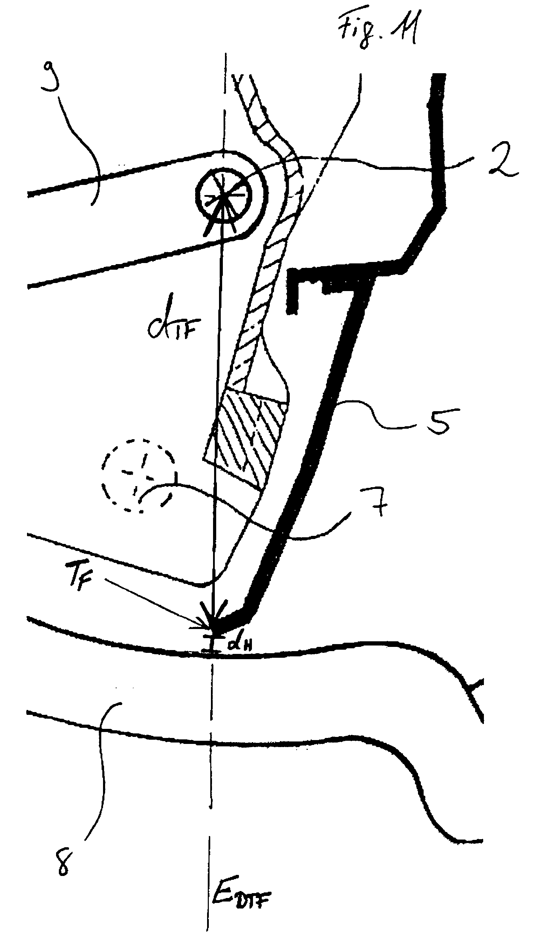

Die Anhängekupplung weist zudem gemäß Fig. 11 das Merkmal auf, dass der Abstand d_{H} von einem tiefsten Punkt T_{F} des Stoßfängers 5 zur Einheit aus Kupplungshals 1 und Kupplungskugel 3 über den Schwenkbereich, in dem die Einheit aus Kupplungshals 1 und Kupplungskugel 3 eine Ebene E_{DTF} durchtritt, die durch die Drehachse 2 und den tiefsten Punkt T_{F} des Stoßfängers 5 verläuft kleiner ist als der Abstand d_{TF} von der Drehachse 2 zum tiefsten Punkt T_{F} des Stoßfängers 5. Hierdurch wird der Vorteil realisiert, dass der Kupplungshals 1 über den Schwenkbereich gesehen, in dem er im Bereich des tiefsten Stoßfängerpunktes steht, dicht am Stoßfänger vorbei geführt wird, so dass hierdurch ein Unterschwenken des Stoßfängers 5 in geringem Abstand erreicht wird. Die dargestellte Anhängekupplung ist zudem derart ausgestaltet, dass der Abstand d_{H} des tiefsten Punktes T_{F} des Stoßfängers 5 zur Einheit aus Kupplungshals 1 und Kupplungskugel 3 über den gesamten Schwenkbereich von der Arbeitsstellung bis in die Ruhestellung kleiner ist als der Abstand d_{TF} von der Drehachse 2 zum tiefsten Punkt T_{F} des Stoßfängers 5.

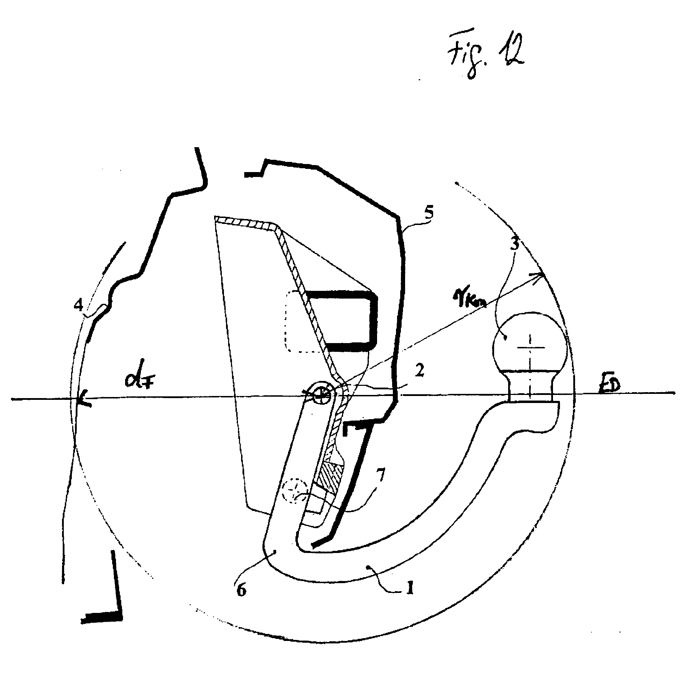

Gemäß Fig. 12 ist die Anhängekupplung zudem derart ausgestaltet, dass der Radius r_{Kon} der äußeren Rotationskontur im Wesentlichen dem Abstand d_{F} von der Drehachse 2 in Höhe einer horizontalen Ebene E_{D}, die durch die Drehachse 2 verläuft, zur Begrenzungswand 4 des Ruhestellungsraums R entspricht. Die Drehachse 2 wird somit derart angeordnet, dass ein vollständiges Einschwenken der Anhängekupplung in etwa bis zur Höhe der Drehachse 2 möglich ist. Somit kann erreicht werden, dass in der Ruhestellung der Kupplungshals 1 wie auch die Drehachse 2 gegen Sicht verdeckt sind. In der Ruhestellung sind der Kupplungshals 1 und die Drehachse 2 oberhalb eines tiefsten Punktes T_{F} des äußeren Stoßfängerabschnitts 5 angeordnet. Der Kupplungshals 1 und die Drehachse 2 sind daher in der Ruhestellung für eine neben dem Fahrzeug stehende Person, die auf den äußeren Stoßfängerabschnitt 5 blickt, nicht sichtbar.

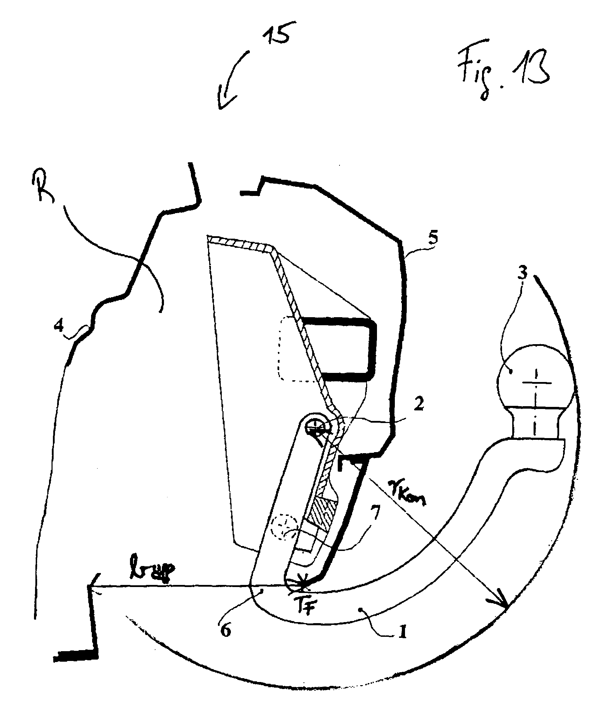

Gemäß Fig. 13 ist das Fahrzeugheck 15 mit der Vorrichtung zur Anordnung am Fahrzeugheck umfassend den Stoßfänger und die Anhängekupplung zudem derart ausgestaltet, dass der Radius r_{Kon} der äußeren Rotationskontur der Anhängekupplung größer ist als die Breite b_{öff} der unteren Durchtrittsöffnung des Ruhestellungsraumes R. Somit gelangen weniger Verunreinigungen oder Fremdkörper wie Äste in den Ruhestellungsraum, so dass die Lebensdauer der Anhängekupplung erhöht wird. Die Breite der Durchtrittsöffnung b_{Öff} ist hierbei auch kleiner als der Abstand d_{F} der Drehachse 2 in Höhe einer horizontalen Ebene E_{D}, die durch die Drehachse 2 verläuft, zur Begrenzungswand 4 des Ruhestellungsraums R.

Bei der Bewegung in die Ruhestellung ist der Kupplungshals 1 vollständig durch die Durchtrittsöffnung in den Ruhestellungsraum R einschwenkbar und somit vollständig gegen Sicht abgedeckt. Zudem ist auch die Kupplungskugel 3 teilweise durch die Durchtrittsöffnung in den Ruhestellungsraum R einschwenkbar, so dass die Optik des Fahrzeuges nicht negativ beeinträchtigt wird.

Die Anhängekupplung ist derart ausgestaltet, dass eine gedachte Verlängerung des Kreisbogens des Kreisbogen-Abschnitts 8 die Kupplungskugel 3 tangential berührt. Somit entspricht die innere Rotationskontur der Kupplungskugel 3 im Wesentlichen der inneren Rotationskontur des Kreisbogen-Abschnitts 8.

Die Schwenkbewegung erfolgt ohne einen Antrieb, wobei in nicht dargestellter Weise für die Schwenkbewegung ein Elektromotor oder ein pneumatischer oder hydraulischer Antrieb verwendet werden kann.

Die Anhängekupplung weist eine nicht näher dargestellte Feststellvorrichtung 7 auf, mittels welcher die Anhängekupplung in der Arbeitsstellung feststellbar ist. Ferner weist sie eine nicht dargestellte Verriegelungsvorrichtung auf, mittels welcher die Anhängekupplung in der Ruhestellung verriegelbar ist, wobei beim Lösen der Verriegelungsvorrichtung die Anhängekupplung selbständig in Arbeitsstellung übergeht. Dies ist möglich, weil der Schwerpunkt der Einheit aus Kupplungshals 1 und Kupplungskugel 3 in der Ruhestellung höher als in der Arbeitsstellung liegt.

Für die Bewegung von der Arbeitsstellung in die Ruhestellung kann die benutzende Person einen Fußstoß einsetzen. Damit hierbei keine Beschädigungen auftreten, weist die Anhängekupplung ein Anschlagblech 13 auf, gegen das der Kupplungshals 1 flächig anstößt.

Um den erforderlichen Ruhestellungsraum weiter zu minimieren, ist der Kupplungshals 1 aus einem bandförmigen Material, nämlich aus einem Flachstahl, gefertigt, der zur Verstärkung mit Verstärkungsrippen versehen ist.

Die dargestellte Anhängekupplung kann somit bei Fahrzeugen Einsatz finden, die einen tief liegenden hinteren Stoßfänger aufweisen. Zudem kann sie wegen der kompakten Schwenkbewegung in einen engen Ruhestellungsraum durch eine schmale Durchtrittsöffnung eingeschwenkt werden, wobei die Bodenfreiheit und die Optik des Fahrzeugs nicht beeinträchtigt werden.

Sämtliche erfindungsgemäßen Ausgestaltungen können zur Erreichung einer besonders vorteilhaften Ausgestaltung auch beliebig miteinander kombiniert werden.

### Bezugszeichenliste:

- 1: Kupplungshals
- 2: Drehachse
- 3: Kupplungskugel
- 4: Karosserieteil
- 5: äußerer Stoßfängerabschnitt
- 6: Abwinklung
- 7: Feststellvorrichtung
- 8: Kreisbogen-Abschnitt
- 9: Radial-Abschnitt
- 10: Kugelsockel
- 11: Träger-Abschnitt
- 12: Querträger
- 13: Anschlagblech
- 14: Karosserieteil
- 15: Fahrzeugheck
- 16: Fahrzeug

- R: Ruhestellungsraum
- F: Fahrzeugfahrtrichtung
- h: Höhe der Kupplungskugel über dem Boden

- T_{K}: tiefster Punkt des Kupplungshalses in der Arbeitsstellung
- T_{Ku}: tiefster Punkt der Kupplungskugel in der Ruhestellung
- H_{H}: höchster Punkt des Kupplungshalses in der Ruhestellung
- T_{F}: tiefster Punkt des äußeren Stoßfängerabschnitts

- l_{R}: Länge des Radial-Abschnitts
- r_{R}: Radius des Kreisbogen-Abschnitts
- r_{Kon}: Radius der äußeren Rotationskontur
- d_{TK}: Abstand Drehachse zu T_{K}
- d_{W}: Abstand Drehachse zur Abwinklung
- d_{K}: Abstand Drehachse zur Kupplungskugel
- d_{H}: Abstand Einheit aus Kupplungshals und Kupplungskugel zu T_{F}
- d_{TF}: Abstand Drehachse zu T_{F}
- b_{Öff}: Öffnungsbreite der Ruhestellungsraum-Durchtrittsöffnung

- E_{D}: horizontale, durch die Drehachse verlaufende Ebene
- E_{K}: durch die Drehachse und T_{Ku} verlaufende Ebene
- E_{H}: durch die die Drehachse H_{H} verlaufende Ebene

- α: Winkel zwischen E_{D} und E_{K}
- β: Winkel zwischen E_{D} und E_{H}

## Patentansprüche

1. Anhängekupplung für Fahrzeuge, die aus einer Arbeitsstellung in eine Ruhestellung bewegbar ist, mit einem Kupplungshals (1), dessen eines Ende mit einer Kupplungskugel (3) verbunden ist und der zum Unterschwenken eines Stoßfängers um eine im Wesentlichen horizontale Drehachse (2) schwenkbar gelagert ist, und wobei der Kupplungshals, (1) einen kreisbogenförmigen Abschnitt (8) aufweist, **dadurch gekennzeichnet, daß** der Radius des kreisbogenförmigen Abschnitts (8) im Wesentlichen dem Ab-stand (d_{TK}) der Drehachse (2) zu einem in der Arbeitsstellung tiefsten Punkt (T_{K}) des Kupplungshalses (1) entspricht, wobei die Drehachse (2) im Mittelpunkt des durch den Kreisbogen-Abschnitt (8) definierten Kreises liegt.

2. Anhängekupplung nach Anspruch 1 , **dadurch gekennzeichnet, dass** der Kupplungshals (1) einen Radial-Abschnitt (9) und einen Kreisbogen-Abschnitt (8) aufweist, wobei die Länge (l_{R}) des Radial-Abschnitts (9) ausgehend von der Drehachse (2) dem Radius (r_{R}) des Kreisbogens des Kreisbogen-Abschnitts (8) entspricht, wobei insbesondere der Kupplungshals (1) aus dem Radial-Abschnitt (9), dem Kreisbogen-Abschnitt (8) und einem Träger-Abschnitt (11) zum Tragen der Kupplungskugel (3) besteht.

3. Anhängekupplung nach einem der vorhergehenden Ansprüche , **dadurch gekennzeichnet, dass** der Kupplungshals (1) zwei Abschnitte (8, 9) aufweist, die über eine Abwinklung (6) miteinander verbunden sind, wobei der Abstand (d_{W}) der Drehachse (2) zur Abwinklung (6) im Wesentlichen dem Abstand (d_{K}) der Drehachse (2) zur Kupplungskugel (3) entspricht.

4. Anhängekupplung nach einem der vorhergehenden Ansprüche , **dadurch gekennzeichnet, dass** die Kupplungskugel (3) über einen Kugelsockel (10) mit dem Kupplungshals (1) verbunden ist und dass in der Arbeitsstellung der Kugelsockel (10) in einer horizontalen Ebene (E_{D}) liegt, die durch die Drehachse (2) verläuft.

5. Anhängekupplung nach einem der vorhergehenden Ansprüche , **dadurch gekennzeichnet, dass** in der Ruhestellung der Winkel (α) zwischen einer horizontalen Ebene (E_{D}), die durch die Drehachse (2) verläuft, und einer Ebene (E_{K}) die durch die Drehachse (2) und den tiefsten Punkt (T_{Ku}) der Kupplungskugel (3) verläuft, im Wesentlichen dem Winkel (β) zwischen der horizontalen Ebene (E_{D}), die durch die Drehachse (2) verläuft, und einer Ebene (E_{H}), die durch die Drehachse (2) und den höchsten Punkt (H_{H}) des Kupplungshalses (1) verläuft, entspricht, wobei insbesondere die beiden Winkel (α, β) jeweils grö-βer als 45° sind.

6. Anhängekupplung nach einem der vorhergehenden Ansprüche, **dadurch gekennzeichnet, dass** die Anhängekupplung mittels eines Antriebs, insbesondere eines Hydraulik- oder Pneumatik-Antriebs, von der Arbeitsstellung in die Ruhestellung bewegbar ist.

7. Anhängekupplung nach einem der vorhergehenden Ansprüche, **dadurch gekennzeichnet, dass** der Kupplungshals (1) in der Ruhestellung oberhalb eines tiefsten Punktes (T_{F}) des äußeren Stoßfängerabschnitts (5) angeordnet ist.

8. Anhängekupplung nach einem der vorhergehenden Ansprüche, **dadurch gekennzeichnet, dass** die Verlängerung des Kreisbogens des Kreisbogen-Abschnitts (8) die Kupplungskugel (3) tangential berührt.

9. Anhängekupplung nach einem der vorhergehenden Ansprüche, **dadurch gekennzeichnet, dass** die Anhängekupplung eine Verriegelungsvorrichtung aufweist, mittels welcher die Anhängekupplung in der Ruhestellung verriegelbar ist, wobei beim Lösen der Verriegelungsvorrichtung die Anhängekupplung selbständig in Arbeitsstellung übergeht.

10. Anhängekupplung nach einem der vorhergehenden Ansprüche, **dadurch gekennzeichnet, dass** der Kupplungshals (1) aus einem bandförmigen Material, insbesondere Flachstahl, hergestellt ist.

11. Vorrichtung zur Anordnung an einem Fahrzeugheck, umfassend einen Stoßfänger mit einem äußeren Stoßfängerabschnitt (5) und eine Anhängekupplung nach einem der vorhergehenden Ansprüche , **dadurch gekennzeichnet, dass** der Kupplungshals (1) in der Ruhestellung in einem Ruhestellungsraum (R) angeordnet ist, der von einem äußeren Stoßfängerabschnitt (5) begrenzt wird, wobei der Radius (r_{Kon}) der äußeren Rotationskontur der Anhängekupplung im Wesentlichen dem Abstand (d_{F}) von der Drehachse (2) in Höhe einer horizontalen Ebene (E_{D}), die durch die Drehachse (2) verläuft, zu einer Begrenzungswand (4) des Ruhestellungsraums (R) entspricht, die dem äußeren Stoßfängerabschnitt (5) gegenüberliegt.

12. Vorrichtung zur Anordnung an einem Fahrzeugheck, umfassend einen Stoßfänger mit einem äußeren Stoßfängerabschnitt (5) und eine Anhängekupplung nach einem der vorhergehenden Ansprüche , **dadurch gekennzeichnet, dass** die Breite (b_{Öff}) einer unteren Durchtrittsöffnung eines Ruhestellungsraums kleiner als der Radius (r_{Kon}) der äußeren Rotationskontur der Anhängekupplung ist, wobei die Drehachse (2) derart zum Kupplungshals (1) angeordnet ist, dass bei der Bewegung in die Ruhestellung der Kupplungshals (1) vollständig und die Kupplungskugel (3) zumindest teilweise durch die Durchtrittsöffnung in den Ruhestellungsraum (R) einschwenkbar sind.

13. Vorrichtung zur Anordnung an einem Fahrzeugheck, umfassend einen Stoßfänger mit einem äußeren Stoßfängerabschnitt (5) und eine Anhängekupplung nach einem der vorhergehenden Ansprüche , **dadurch gekennzeichnet, dass** der Abstand (d_{H}) von einem tiefsten Punkt (T_{F}) des äußeren Stoßfängerabschnitts (5) zur Einheit aus Kupplungshals (1) und Kupplungskugel (3) über den Schwenkbereich, in dem die Einheit aus Kupplungshals (1) und Kupplungskugel (3) eine Ebene (E_{DTF}) durchtritt, die durch die Drehachse (2) und den tiefsten Punkt (T_{F}) des äußeren Stoßfängerabschnitts (5) verläuft, kleiner ist als der Abstand (d_{TF}) von der Drehachse (2) zum tiefsten Punkt (T_{F}) des Stoßfängers (5).

14. Vorrichtung nach Anspruch 13, **dadurch gekennzeichnet, dass** der Abstand (d_{H}) des tiefsten Punkts (T_{F}) des äußeren Stoßfängerabschnitts (5) zur Einheit aus Kupplungshals (1) und Kupplungskugel (3) über den gesamten Schwenkbereich von der Arbeitsstellung bis in die Ruhestellung kleiner ist als der Abstand (d_{TF}) von der Drehachse (2) zum tiefsten Punkt (T_{F}) des äußeren Stoßfängerabschnitts (5).

15. Fahrzeugheck mit einer Vorrichtung zur Anordnung an einem Fahrzeugheck nach einem der vorhergehenden Ansprüche, **dadurch gekennzeichnet, dass** der Kupplungshals (1) in der Ruhestellung in einem Ruhestellungsraum (R) angeordnet ist, der von einem äußeren Stoßfängerabschnitt (5) und einem Karosserieteil (4) des Fahrzeughecks begrenzt wird.

## Claims

1. Towing coupling for vehicles that can be moved from a working position into a position of rest, comprising a coupling neck (1), one end of which is connected to a coupling ball (3) and which is mounted in such a way that it can be pivoted downwards so as to tilt a bumper through an essentially vertical axis of rotation (2), and whereby the coupling neck (1) comprises an arc-shaped section (8) **characterised by** that the radius of the arc-shaped section (8) corresponds essentially to the distance (d_{τκ}) of the axis of rotation (2) to the lowest point (T_{κ}) of the coupling neck (1) in the working position, whereby the axis of rotation (2) lies at the centre point of the circle defined by the arc-shaped section (8).

2. Towing coupling in accordance with claim 1, **characterised in that** the coupling neck (1) comprises a radial section (9) and an arc-shaped section (8), whereby the length (l_{R}) of the radial section (9) starting at the axis of rotation (2) is equivalent to the radius (r_{R}) of the arc of the arc-shaped section (8), whereby in particular the coupling neck (1) comprises the radial section (9), the arc-shaped section (8) and a supporting element (11) for supporting the coupling ball (3).

3. Towing coupling in accordance with either of the above claims, **characterised in that** the coupling neck (1) comprises two sections (8, 9) which are joined together by a bending (6), whereby the distance (dw) of the axis of rotation to the said bending (6) effectively corresponds to the distance (d_{K}) of the axis of rotation (2) to the coupling ball (3).

4. Towing coupling in accordance with any of the above claims, **characterised in that** the coupling ball (3) is connected via a ball pedestal (10) to the coupling neck (1) and that, in the working position the ball pedestal (10) lies in a horizontal plane (E_{D}), which passes through the axis of rotation (2).

5. Towing coupling in accordance with any of the above claims, **characterised in that**, in the position of rest, the angle (α) between a horizontal plane (E_{D}), which passes through the axis or rotation (2), and a plane (E_{K}), which passes through the axis of rotation (2) and the lowest point (T_{Ku}) of the coupling ball (3), essentially corresponds to the angle (β) between the horizontal plane (E_{D}), which passes through the axis of rotation (2), and a plane (E_{H}), which passes through the axis of rotation (2) and the highest point (H_{H}) of the coupling neck (1), whereby in particular the two angles (α, β) are both greater than 45°.

6. Towing coupling in accordance with any of the above claims, **characterised in that**, by means of a drive system, in particular a hydraulic or pneumatic drive system, the towing coupling can be moved from the working position into the position of rest.

7. Towing coupling in accordance with any of the above claims, **characterised in that**, in the position of rest, the coupling neck (1) is located above the lowest point (T_{F}) of the outer bumper section (5).

8. Towing coupling in accordance with any of the above claims, **characterised in that** the extension of the arc of the arc-shaped section (8) tangentially touches the coupling ball (3).

9. Towing coupling in accordance with any of the above claims, **characterised in that** the towing coupling comprises a locking device, by means of which the towing coupling can be locked in its position at rest, whereby, when the locking device is released, the towing coupling reverts automatically to its working position.

10. Towing coupling in accordance with any of the above claims, **characterised in that** the coupling neck (1) is manufactured from material in the form of a sheet, and in particular of flat steel.

11. Device for arranging on the tail of a vehicle, encompassing a bumper with an outer bumper section (5) and a towing coupling in accordance with any of the above claims, **characterised in that** the coupling neck (1) is arranged in a position at rest within a rest position space (R), which is bordered by an outer bumper section (5), whereby the radius (r_{Kon}) of the outer rotation contour of the towing coupling essentially corresponds to the distance (d_{F}) between the axis of rotation (2) at the height of a horizontal plane (E_{D}), passing through the axis of rotation (2), and a limiting wall (4) of the rest position space (R) lying opposite the outer bumper section (5).

12. Device for arranging on the tail of a vehicle, encompassing a bumper with an outer bumper section (5) and a towing coupling in accordance with any of the above claims, **characterised in that** the width (b_{Öff}) of a lower access aperture into a rest position space (R) is smaller than the radius (r_{Kon}) of the outer rotation contour of the towing coupling, whereby the axis of rotation (2) is arranged in such a way in relation to the coupling neck (1) that, when moved into the position of rest, the coupling neck (1) can be completely, and the coupling ball (3) can be at least partially pivoted through the access aperture into the rest position space (R).

13. Device for arranging on the tail of a vehicle, encompassing a bumper with an outer bumper section (5) and a towing coupling in accordance with any of the above claims, **characterised in that** the distance (d_{H}) from the lowest point (T_{F}) of the outer bumper section (5) to the unit comprising the coupling neck (1) and coupling ball (3) through the pivoting area, in which the unit comprising the coupling neck (1) and the coupling ball (3) crosses a plane (E_{DTF}), which passes through the axis of rotation (2) and the lowest point (T_{F}) of the outer bumper section (5), is smaller than the distance (d_{TF}) between the axis of rotation (2) and the lowest point (T_{F}) of the bumper (5).

14. Device in accordance with claim 13 above, **characterised in that** the distance (d_{H}) between the lowest point (T_{F}) of the outer bumper section (5) and the unit comprising the coupling neck (1) and the coupling ball (3) over the entire pivoting range from the working position to the position at rest is smaller than the distance (d_{TF}) between the axis of rotation (2) and the lowest point (T_{F}) of the outer bumper section (5).

15. Vehicle tail with a device to be arranged on a vehicle tail in accordance with any of the above claims, **characterised in that** the coupling neck (1) is arranged in its position of rest (R), which is bordered by an outer bumper section (5) and a part of the bodywork (4) of the vehicle tail.

## Revendications

1. Attelage pour véhicules pouvant être déplacé d'une position de travail à une position de repos, avec un col d'attelage (1) dont une extrémité est assemblée à une boule d'attelage (3) et qui est monté de manière à pouvoir pivoter autour d'un axe de rotation (2) sensiblement horizontal afin de pivoter sous un pare-chocs, et dans lequel le col d'attelage (1) comporte une partie (8) en arc de cercle, **caractérisé en ce que** le rayon de la partie (8) en arc de cercle est sensiblement égal à la distance (d_{TK}) entre l'axe de rotation (2) et un point le plus bas (T_{K}) du col d'attelage (1) dans la position de travail, l'axe de rotation (2) se trouvant au centre du cercle défini par la partie (8) en arc de cercle.

2. Attelage selon la revendication 1, **caractérisé en ce que** le col d'attelage (1) comporte une partie radiale (9) et une partie (8) en arc de cercle, la longueur (L_{R}) de la partie radiale (9) à partir de l'axe de rotation (2) étant égale au rayon (r_{R}) de l'arc de cercle de la partie (8) en arc de cercle, dans lequel le col d'attelage (1) est notamment constitué de la partie radiale (9), de la partie (8) en arc de cercle et d'une partie porteuse (11) pour porter la boule d'attelage (3).

3. Attelage selon l'une quelconque des revendications précédentes, **caractérisé en ce que** le col d'attelage (1) comporte deux parties (8, 9) qui sont reliées entre elles par l'intermédiaire d'un coude (6), la distance (d_{W}) entre l'axe de rotation (2) et le coude (6) étant sensiblement égale à la distance (d_{K}) entre l'axe de rotation (2) et la boule d'attelage (3).

4. Attelage selon l'une quelconque des revendications précédentes, **caractérisé en ce que** la boule d'attelage (3) est reliée par l'intermédiaire d'une embase de boule (10) au col d'attelage (1), et **en ce que**, dans la position de travail, l'embase de boule (10) se situe dans un plan horizontal (E_{D}) passant par l'axe de rotation (2).

5. Attelage selon l'une quelconque des revendications précédentes, **caractérisé en ce que**, dans la position de repos, l'angle (α) entre un plan horizontal (E_{D}) passant par l'axe de rotation (2) et un plan (E_{K}) passant par l'axe de rotation (2) et par le point le plus bas (T_{Ku}) de la boule d'attelage (3) est sensiblement égal à l'angle (β) entre le plan horizontal (E_{D}) passant par l'axe de rotation (2) et un plan (E_{H}) passant par l'axe de rotation (2) et le point le plus haut (H_{H}) du col d'attelage (1), dans lequel les deux angles (α, β) sont en particulier respectivement supérieurs à 45°.

6. Attelage selon l'une quelconque des revendications précédentes, **caractérisé en ce que** l'attelage peut être déplacé de la position de travail à la position de repos au moyen d'un entraînement, en particulier d'un entraînement hydraulique ou pneumatique.

7. Attelage selon l'une quelconque des revendications précédentes, **caractérisé en ce que** le col d'attelage (1) est disposé dans la position de repos au-dessus d'un point le plus bas (T_{F}) de la partie extérieure (5) de pare-chocs.

8. Attelage selon l'une quelconque des revendications précédentes, **caractérisé en ce que** le prolongement de l'arc de cercle de la partie (8) en arc de cercle touche tangentiellement la boule d'attelage (3).

9. Attelage selon l'une quelconque des revendications précédentes, **caractérisé en ce que** l'attelage comporte un dispositif de verrouillage au moyen duquel l'attelage peut être verrouillé dans la position de repos, l'attelage passant automatiquement en position de travail lors de la libération du dispositif de verrouillage.

10. Attelage selon l'une quelconque des revendications précédentes, **caractérisé en ce que** le col d'attelage (1) est fabriqué à partir d'un matériau en forme de bande, en particulier d'acier plat.

11. Dispositif destiné à être disposé à l'arrière d'un véhicule, comprenant un pare-chocs doté d'une partie extérieure (5) de pare-chocs et un attelage selon l'une quelconque des revendications précédentes, **caractérisé en ce que** le col d'attelage (1) est disposé dans la position de repos dans un espace de position de repos (R) qui est délimité par une partie extérieure (5) de pare-chocs, le rayon (r_{Kon}) du contour de rotation extérieur de l'attelage étant sensiblement égal à la distance (d_{F}) entre l'axe de rotation (2), à hauteur d'un plan horizontal (E_{D}) passant par l'axe de rotation (2), et une paroi de délimitation (4) de l'espace de position de repos (R) qui est opposée à la partie extérieure (5) du pare-chocs.

12. Dispositif destiné à être disposé à l'arrière d'un véhicule, comprenant un pare-chocs doté d'une partie extérieure (5) de pare-chocs et un attelage selon l'une quelconque des revendications précédentes, **caractérisé en ce que** la largeur (b_{Öff}) d'une ouverture de passage inférieure d'un espace de position de repos est inférieure au rayon (r_{Kon}) du contour de rotation extérieur de l'attelage, dans lequel l'axe de rotation (2) est disposé par rapport au col d'attelage (1) de telle sorte que, lors du déplacement dans la position de repos, le col d'attelage (1) et la boule d'attelage (3) sont, par l'ouverture de passage, rentrés par pivotement respectivement en totalité et au moins en partie dans l'espace de position de repos (R).

13. Dispositif destiné à être disposé à l'arrière d'un véhicule, comprenant un pare-chocs doté d'une partie extérieure (5) de pare-chocs et un attelage selon l'une quelconque des revendications précédentes, **caractérisé en ce que** la distance (d_{H}) entre un point le plus bas (T_{F}) de la partie extérieure (5) de pare-chocs et l'ensemble constitué du col d'attelage (1) et de la boule d'attelage (3), sur la plage de pivotement dans laquelle l'ensemble constitué du col d'attelage (1) et de la boule d'attelage (3) traverse un plan (E_{DTF}) passant par l'axe de rotation (2) et par le point le plus bas (T_{F}) de la partie extérieure (5) de pare-chocs, est inférieure à la distance (d_{TF}) entre l'axe de rotation (2) et le point le plus bas (T_{F}) du pare-chocs (5).

14. Dispositif selon la revendication 13, **caractérisé en ce que** la distance (d_{H}) entre le point le plus bas (T_{F}) de la partie extérieure (5) de pare-chocs et l'ensemble constitué du col d'attelage (1) et de la boule d'attelage (3), sur toute la plage de pivotement de la position de travail à la position de repos, est inférieure à la distance (d_{TF}) entre l'axe de rotation (2) et le point le plus bas (T_{F}) de la partie extérieure (5) de pare-chocs.

15. Arrière de véhicule comprenant un dispositif destiné à être disposé à l'arrière d'un véhicule selon l'une quelconque des revendications précédentes, **caractérisé en ce que** le col d'attelage (1) est disposé dans la position de repos dans un espace de position de repos (R) qui est délimité par une partie extérieure (5) de pare-chocs et par un élément de carrosserie (4) de l'arrière de véhicule.
